# NEUE EUROPÄISCHE PATENTSCHRIFT

(11) **EP 2 819 939 B2**
(45) Veröffentlichungstag und Bekanntmachung des Hinweises auf die Entscheidung über den Einspruch: **10.04.2019**
(45) Hinweis auf die Patenterteilung: 30.03.2016
(21) Anmeldenummer: 13702596.1
(22) Anmeldetag: 23.01.2013
(51) Int. Cl.: B65G 39/09

(54) **TRAGROLLENLAGER MIT FEDERACHSE**
CONVEYOR ROLLER BEARING WITH SPRING AXLE
PALIER À ROULEAUX PORTEURS ÉQUIPÉ D'UN AXE À RESSORT

(30) Priorität: 28.02.2012 DE 202012100681 U
(43) Veröffentlichungstag der Anmeldung: 07.01.2015
(73) Patentinhaber: Markes GmbH & Co. Kg, 58507 Lüdenscheid (DE)
(72) Erfinder: DEGEN, Thomas, 58553 Halver (DE)
(74) Vertreter: Staeger & Sperling Partnerschaftsgesellschaft mbB
(86) Internationale Anmeldenummer: PCT/EP2013/051260
(87) Internationale Veröffentlichungsnummer: WO 2013/127569

(56) Entgegenhaltungen:
- DE-U1- 20 207 728
- DE-U1-202010 007 189
- US-A1- 2004 108 189

## Beschreibung

Die Erfindung betrifft ein Tragrollenlager mit einem Radkörper und einer darin angeordneten Nabe innerhalb derer eine Achse in axialer Richtung verschiebbar aufgenommen ist.

Tragrollenlager werden in Tragrollen bei Fördervorrichtungen eingesetzt, um ein Stückgut (z.B. Pakete) reibungsarm zu fördern. Um den Einsatz aktiver zusätzlicher Beförderungsantriebsmittel zu vermeiden, ist es gewünscht, dass das Stückgut nur mit Hilfe der Schwerkraft von einer ersten zu einer zweiten Position förderbar ist. Derartige Tragrollen finden beispielsweise Verwendung in Versandzentren oder auch an Supermarktkassen.

Nachdem das zu fördernde Stückgut zumindest zum Teil eine erhebliche Masse aufweist, können auf die Tragrollen und somit die Tragrollenlager große Kräfte einwirken. Es werden deshalb unter anderem zur Lagerung der sich durch die Tragrolle erstreckenden Achse DIN-Lager eingesetzt. Diese sind dahingehend vorteilhaft, dass sie ein sehr geringes Lagerspiel aufweisen.

Bei der Verwendung von DIN-Lagern ist jedoch nachteilig, dass sie schwergängiger anlaufen und somit eine Förderung ausschließlich mittels Schwerkraft nicht oder nur bedingt möglich ist. Für leichtes Stückgut fallen DIN-Lager deshalb aus.

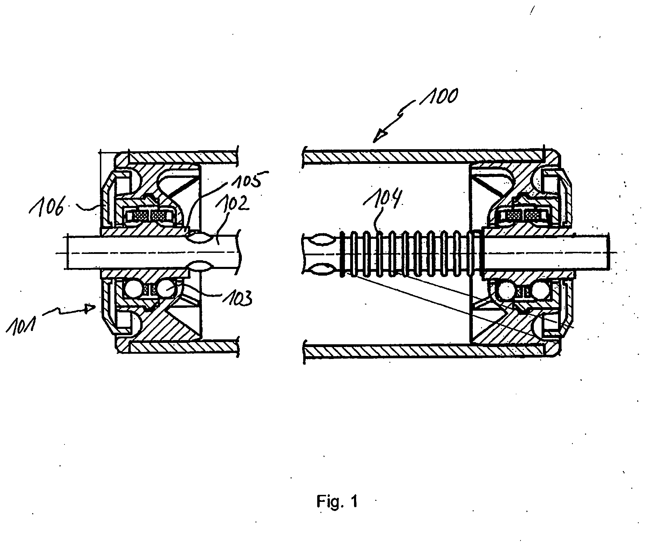

Die bisher verwendete Lösung, bei der sich die Achse über die gesamte axiale Länge der Tragrolle und durch die seitlich an der Tragrolle angebrachten Tragrollenlager hindurch erstreckt, ist zwar stabil, jedoch dahingehend nachteilig, dass die Achsbearbeitung aufwendig und kostenintensiv ist, wie nachstehend noch unter Bezugnahme auf Fig. 1 beschrieben wird.

Aus der DE 20 2010 007 189 U1 ist ebenfalls eine Tragrolle mit beidseitig angeordneten Tragrollenlagern offenbart, wobei sich die Achse durch die gesamte Tragrolle erstreckt.

Aus der DE 202 07 728 U1 ist ferner eine Förderrolle bekannt, die über beidseitig angeordnete Lager an der Förderbahn befestigt ist, wobei auf eine die Tragrolle durchdringende Achse verzichtet wurde. Die Lager sind über ein Trägermittel an der Bahn angeschraubt. Die aus dem Stand der Technik bekannte Lösung ist unter anderem dahingehend nachteilig, dass die Befestigung der Tragrolle aufwendig mittels Verschraubung vollzogen werden muss. Dies ist bei dem üblichen Einsatz einer Vielzahl von Tragrollen in Reihe unpraktikabel und teuer.

US 5,088,596 beschreibt eine gattungsgemäße Tragrolle.

Ausgehend von den bekannten Offenbarungen ist es die Aufgabe der vorliegenden Erfindung, ein Tragrollenlager bereitzustellen, das einfach und schnell an die Förderbahn anbringbar ist, und eine Förderung sowohl von geringmassigen als auch großmassigen Gegenständen ausfallsicher betreibbar ist.

Die vorliegende Aufgabe wird durch ein Tragrollenlager nach Anspruch 1 gelöst.

Das durch die Merkmale des Anspruchs 1 beschriebene Tragrollenlager ist dahingehend vorteilhaft, dass es eine in das Tragrollenlager integrierte in axialer Richtung verschiebbare Achse umfasst, die leicht in die Förderbahn einsteckbar ist, so dass auf eine aufwendige Achskonstruktion verzichtet werden kann. Zur Erreichung der notwendigen Stabilität wird erfindungsgemäß vorgesehen, die Nabe mehrfach zu lagern, d.h. dass mindestens zwei Lagerpunkte vorgesehen sind, um die auf das Tragrollenlager wirkenden Last zu verteilen.

Dabei sind der erste und der zweite Lagerpunkt in axialer Richtung voneinander beabstandet angeordnet, so dass sich die senkrecht zur axialen Richtung wirkende Kraft auf beide Lagerpunkte über eine große Länge des Tragrollenlagers verteilt und eine Verkantung der Nabe innerhalb des Tragrollenlagers ausgeschlossen wird.

Dabei ist die Beabstandung der ersten und der zweiten Lagerpunkte mindestens ein Viertel, vorzugsweise mindestens ein Drittel der axialen Erstreckungslänge der Nabe innerhalb des Radkörpers. Die Längenmessung erfolgt hierbei an den jeweils gegenüberliegenden, sich zuweisenden Randflächen des jeweiligen Lagerpunktes.

Erfindungsgemäß sind der erste und der zweite Lagerpunkt jeweils durch spanlos gefertigte Kugellager mit Kugelreihe gebildet, insbesondere als Radial-Rillenkugellager. Dies ist vorteilhaft, da spanlos hergestellte Kugellager ein größeres Lagerspiel aufweisen und somit ein äußerst geringes Reibmoment haben, eine hohe Steifigkeit aufweisen, einfach montiert werden können und kostengünstig sind. Gegenüber den bisher verwendeten DIN-Lagern ist der größte Vorteil, dass die spanlos gefertigten Kugellager durch ihre besondere Leichtgängigkeit eine Förderung von Stückgut ausschließlich mittels Schwerkraft ermöglichen. Das erfindungsgemäße Tragrollenlager kann somit auch zur Förderung von sehr leichten Gegenständen verwendet werden, ohne dass die Gefahr besteht, dass das Stückgut auf dem Förderband stehen bleibt und durch externe Mittel angetrieben werden muss.

In einer Ausführung der Erfindung ist die Achse formschlüssig innerhalb der Nabe gleitend angeordnet, wobei ihre axiale Erstreckung einseitig innerhalb der Nabe endet. Die Achse kann somit durch Krafteinwirkung von außen in die Nabe hinein gedrückt werden, wobei sie an die Innenfläche der Nabe anliegend abgestützt ist. Ein Verkanten der Achse innerhalb der Nabe ist somit ausgeschlossen.

In einer bevorzugten Ausführung ist die Achse vollständig in die Nabe einsteckbar, so dass die Achse mit der Nabe und/oder dem Radkörper eine bündige Außenfläche bildet, und somit leicht in die eng bemessenen Abstände der Förderbahn einbringbar ist.

Um die Achse selbständig wieder aus der Nabe ausschiebbar zu gestalten, ist in der Nabe eine sich an dieser abstützende Feder derart angeordnet, dass sie auf die Achse eine Kraft in axialer Richtung ausüben kann, sobald die Achse aus ihrer Ursprungsposition in die Nabe eingedrückt wird.

In einer vorteilhaften Ausführung ist in der Nabe ein sich in axialer Richtung zur Achse hin erstreckender Vorsprung vorgesehen, den die Feder umgibt bzw. umschließt. Der Vorsprung erstreckt sich zur Achse hin entlang deren Mittelachse.

Günstig ist ferner, dass die Achse mit einem einseitig offenen inneren Hohlraum ausgebildet ist, in den sich die Feder hinein erstreckt. Auf diese Weise kann die Achse die Feder zumindest teilweise umschließen, wobei gewährleistet ist, dass die Achse vollständig in die Nabe einschiebbar ist. Die Achse weist im Inneren einen Vorsprung auf, an dem sich die Feder abstützen kann.

In einer vorteilhaften Ausführung erstreckt sich die Nabe über die gesamte axiale Länge des Radkörpers, wobei der erste Lagerpunkt im Wesentlichen in einem ersten Randbereich des Radkörpers und der zweite Lagerpunkt im gegenüberliegenden Randbereich angeordnet sind. Für eine kompakte Bauweise bei größtmöglicher Abstützung der Nabe schließt mindestens einer der Lagerpunkte bzw. die Randfläche der den Lagerpunkt definierenden Konstruktion, bündig mit der Außenkante des Radkörpers ab.

Ferner ist vorteilhaft, dass die Nabe auf der Seite der Achse als einseitiger Verschluss des Radkörpers dient, so dass ein Eindringen von Verunreinigungen wie Fremdkörpern ins Innere des Tragrollenlagers verhindert wird. Hierbei erstreckt sich die Nabe in radialer Richtung über die radiale Ausdehnung des ersten Lagerpunktes hinaus. Um die kompakte Bauweise ferner zu begünstigen, kann der Radkörper eine Aussparung aufweisen, in welche die radiale Erstreckung der Nabe eingreift, so dass der Radkörper und die Nabe eine im Wesentlichen bündige Außenfläche bilden.

Die Erfindung sieht vor, dass die Nabe einen Innenring des Tragrollenlagers an mindestens einem der ersten und zweiten Lagerpunkte bildet. Ferner ist bevorzugt, dass der Radkörper einen Außenring des Tragrollenlagers an mindestens einem der ersten und zweiten Lagerpunkte bildet. Auf diese Weise kann die Anzahl der notwendigen Bauteile und somit die Kosten reduziert werden.

Zur Befestigung der Achse innerhalb der Nabe ist vorteilhafter Weise vorgesehen, dass die Achse einen radialen Vorsprung aufweist, der an einer an der Nabe innenseitig ausgebildeten Nut gleitend anliegt. Somit ist sichergestellt, dass die Achse, nachdem sie einmal in die Nabe hineingedrückt wurde, ohne Gewalteinwirkung sich nicht wieder aus der Nabe löst. Ferner bietet der Vorsprung eine Abstützung in radialer Richtung.

Als vorteilhafte Materialien können Kunststoffe, beispielsweise für den Radkörper und die Achse Polypropylen, für die Nabe Polyoxymethylen verwendet werden.

Die oben genannten Merkmale können alternativ oder kumulativ in beliebigen Variationen für weitere Ausführungen verwendet werden, soweit dies technisch möglich ist. Weitere Vorteile werden nachstehend in der Beschreibung eines bevorzugten Ausführungsbeispiels näher dargestellt. Es zeigen:
- Fig. 1: eine Schnittansicht einer Tragrolle mit Tragrollenlager gemäß dem Stand der Technik;
- Fig. 2: eine seitliche Schnittansicht eines Tragrollenlagers im Grundzustand;
- Fig. 3: eine seitliche Schnittansicht eines Tragrollenlagers mit eingedrückter Achse; und
- Fig. 4: eine seitliche Schnittansicht eines Tragrollenlagers im Grundzustand in einer alternativen Ausführung.

Die Darstellung in den beigefügten Figuren erfolgt beispielhaft schematisch. In den Figuren sind jeweils gleiche Bauteile mit gleichen Bezugszeichen versehen. Ferner sind nur die für das Verständnis wesentlichen Elemente dargestellt.

In Fig. 1 ist eine aus dem Stand der Technik bekannte Tragrolle 100 in einer seitlichen Schnittansicht mit ausgespartem Mittelbereich dargestellt, wobei auf den sich jeweils gegenüberliegenden Seiten je ein Tragrollenlager 101 angeordnet ist. Durch die Tragrolle 100 erstreckt sich über deren gesamte Länge die Achse 102 und durchdringt die Tragrollenlager 101 vollständig, so dass die Achse 102 zu beiden Seiten über die Tragrolle 100 hervorsteht. Jedes der Tragrollenlager 101 ist mit je einem Achslager 103 versehen, das in der gezeigten Ausführung als doppeltes Schrägkugellager ausgeführt ist. Über den Innenring 105 des Schrägkugellagers 103 wird die Drehbarkeit der Achse 102 gewährleistet. Über eine Feder 104 wird die Verschieblichkeit der Achse 102 in axialer Richtung zur Einbringung der Tragrolle 100 in die Förderbahn ermöglicht. Zur Abdichtung der Tragrollenlager 101 ist jeweils eine Dichtkappe 106 vorgesehen, welche das Tragrollenlager 101 vor Verschmutzungen schützt.

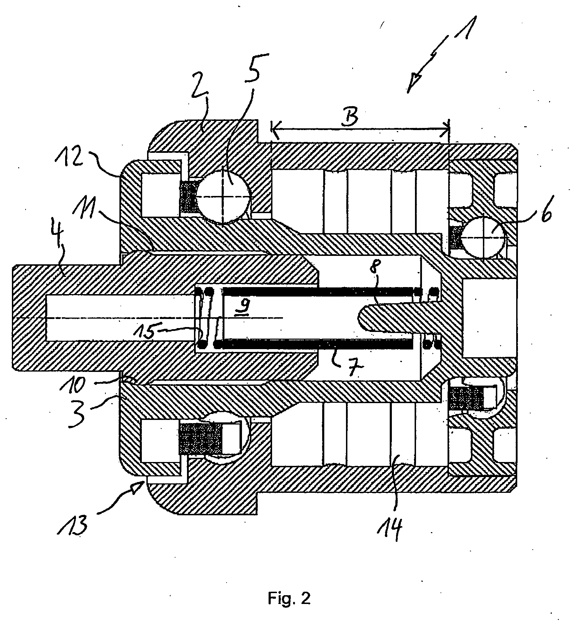

In Fig. 2 ist das Tragrollenlager 1 in einer bevorzugten erfindungsgemäßen Ausführung in einer seitlichen Schnittansicht dargestellt. Ein derartiges Tragrollenlager 1 wird beidseitig in die nicht dargestellte Tragrolle eingesetzt. Das Tragrollenlager 1 umfasst einen im Wesentlichen rohrförmigen Radkörper 2 mit einer darin gelagert angeordneten Nabe 3, die sich über die gesamte axiale Länge des Radkörpers 2 durch diesen hindurch erstreckt. Die Nabe 3 ist an der Mittellinie des Radkörpers 2 ausgerichtet und auf einer ersten axialen Seite des Radkörpers 2 (in Fig. 2: linke Seite) ist zwischen dem Radkörper 2 und der Nabe 3 ein erster Lagerpunkt 5 vorgesehen, wobei der Lagerpunkt 5 durch ein spanlos gefertigtes Kugellager gebildet ist. Neben der Lagerfunktion dient das Kugellager ferner zur Befestigung der Nabe 3 innerhalb des Radkörpers 2, wobei die Nabe 3 in Umfangsrichtung eine außenseitige Einsenkung aufweist, innerhalb derer die Kugeln des ersten Lagerpunktes 5 laufen. Die Nabe 3 dient somit als Innenring, der Radkörper 2 als Außenring des Tragrollenlagers 1 mit den Kugelreihen an dem Lagerpunkt 5. Auf einer der ersten Seite axial gegenüberliegenden zweiten Seite (in Fig. 2: rechte Seite) ist innerhalb des Radkörpers 2 ein zweiter Lagerpunkt 6 angeordnet, welcher die Nabe 3 im rechten Randbereich des Tragrollenlagers 1 lagert, so dass die Nabe 3 insgesamt durch die Lagerpunkte 5, 6 mit den dort jeweils angeordneten Kugelreihen mehrfach gelagert ist. Auch der Lagerpunkt 6 ist in der gezeigten Darstellung durch spanlos gefertigtes Kugellager gebildet, wobei die den Lagerpunkt 6 bildenden Lagerkonstruktion seitlich in den Radkörper 2 eingeschoben ist, bis sie an einem in dem Radkörper 2 gebildeten Vorsprung anliegt. Die Nabe 3 bildet auch den Innenring des Tragrollenlagers 1 an dem zweiten Lagerpunkt 6.

Zur Vermeidung der Verkantung der Nabe 3 innerhalb des Tragrollenlagers 1 sind die Lagerpunkte 5, 6 voneinander in axialer Richtung beabstandet angeordnet, so dass eine senkrecht zur axialen Richtung wirkende Kraft kein oder ein ausreichend geringes Moment auf die Nabe 3 bewirkt. In der gezeigten Darstellung entspricht die Beabstandung B des ersten und zweiten Lagerpunktes 5, 6 gemessene 0,48 - mal der axialen Erstreckungslänge der Nabe 3 innerhalb des Radkörpers 2, wobei der Abstand B an den sich jeweils zuweisenden Randflächen der die Lagerpunkte 5, 6 bildenden Konstruktionselemente zu messen ist.

Innerhalb der Nabe 3 ist die Achse 4 in axialer Richtung verschiebbar aufgenommen und steht mit dem in die Förderbahn einzubringenden Abschnitt über den Randbereich der Nabe 3 hervor. Die gezeigte Ausführung des Tragrollenlagers 1 entspricht somit dem Grund- bzw. Betriebszustand ohne außenseitige Krafteinwirkung. Die Achse 4 ist formschlüssig innerhalb der Nabe 3 gleitend angeordnet, wobei die außenseitige Umfangsfläche der Achse 4 teilweise an der inneren Umfangsfläche der Nabe 3 anliegt uns somit eine Führung innerhalb der Nabe 3 gewährleistet. Die Erstreckung der Achse 4 innerhalb der Nabe 3 ist derart gewählt, dass die Achse 4 vollständig in die Nabe einschiebbar ist, wobei im Grundzustand die axiale Erstreckung der Achse 4 in der Nabe 3 endet. Innerhalb der Nabe 3 ist in Wirkverbindung zwischen der Nabe 3 und der Achse 4 eine Feder 7 angeordnet, die sich in axialer Richtung in einen innerhalb der Achse 4 befindlichen Hohlraum 9 hinein erstreckt, und sich an dem Absatz 15 der Achse 4 abstützt. Zur Sicherung der Federposition ist an der Nabe 3 ein sich in axialer Richtung zur Achse 4 hin erstreckender Vorsprung 8 vorgesehen, den die Feder 7 umgibt. Es ist somit sichergestellt, dass die Feder 7 stets an der vorgesehenen Position innerhalb der Nabe verbleibt und die Federkraft geradlinig auf die Achse 4 wirkt, um diese aus der Nabe 3 heraus zu schieben und in dieser (Grund-)Position zu halten. Die Achse 4 weist in Umfangsrichtung einen Vorsprung 10 auf, der an einer an der Nabe 3 innenseitig in Umfangsrichtung ausgebildeten Nut 11 gleitend anliegt. Der Durchmesser der Öffnung der Nabe 3, innerhalb derer die Achse 4 angeordnet ist, ist kleiner als der Durchmesser der Achse 4 im Bereich des Vorsprungs 10, so dass der Vorsprung 10 als Sicherung der Achse 4 in der Nabe 3 dient. Beim Zusammenbau wird die Achse 4 einmalig in die Nabe 3 eingedrückt, wobei das Material derart gewählt ist, dass die Achse 4 und Nabe 3 elastisch genug sind, um das Einbringen der Achse 4 in die Nabe 3 sicherzustellen. Wenn das Tragrollenlager 1 demontiert wird, kann die Achse 4 bei Bedarf auch wieder aus der Nabe 3 gelöst und gegebenenfalls ersetzt werden.

Auf der ersten Seite weist der Radkörper 2 in Umfangsrichtung eine Aussparung 13 auf, in die der radiale Randbereich 12 der Nabe 3 eingreift und somit als einseitiger Verschluss des Radkörpers 2 dient. Der radiale Randbereich 12 der Nabe 3 erstreckt sich in radialer Richtung so weit, dass die konstruktionsbedingten axialen Öffnungen des ersten Lagerpunktes 5 überdeckt sind. Der axiale Randbereich 12 der Nabe 3 bildet somit mit dem axialen Randbereich des Radkörpers 2 im zusammengebauten Zustand im Wesentlichen eine bündige Außenfläche. Innerhalb des Radkörpers 2 sind Entformungsrippen 14 für das Herstellverfahren (Spritzgussverfahren) vorgesehen.

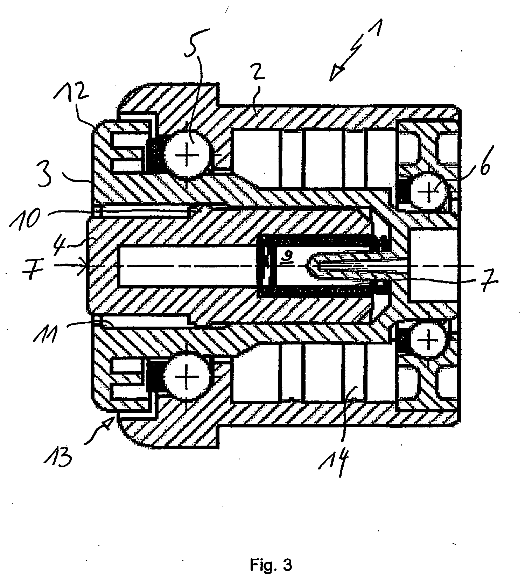

In Fig. 3 ist das Tragrollenlager 1 in einer seitlichen Schnittansicht dargestellt, wobei die einzelnen Bauteile mit denen der Fig. 2 übereinstimmen. Bei dem Tragrollenlager 1 gemäß Fig. 3 ist die Achse 4 vollständig in die Nabe 3 durch eine in axiale Richtung wirkende Krafteinwirkung F eingeschoben. Die Feder 7 ist zusammengedrückt und wirkt gegen die Kraft F, so dass, sobald die Krafteinwirkung von außen beendet wird, die Achse 4 wieder in den Grundzustand gemäß Fig. 2 zurückgeführt wird.

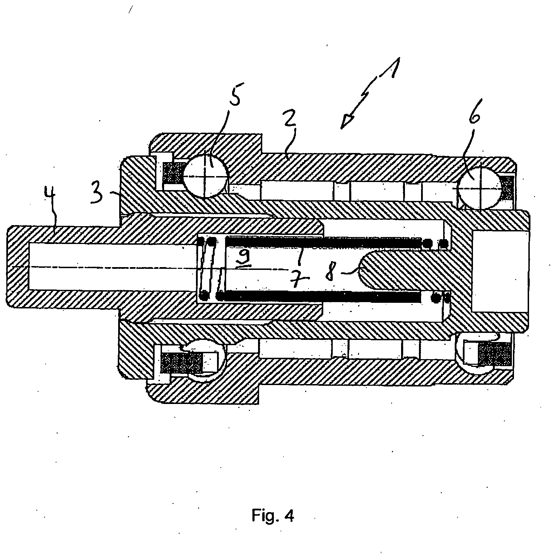

In Fig. 4 ist das Tragrollenlager 1 in einer weiteren Ausführungsform in einer seitlichen Schnittansicht im Grundzustand dargestellt, wobei der zweite Lagerpunkt 6 so gebildet ist, dass der Radkörper 2 den Außenring und die Nabe 3 den Innenring des Tragrollenlagers 1 an beiden Lagerpunkten 5, 6 bilden. Dies wird dadurch erzielt, dass der Durchmesser des Radkörpers 2 verringert wird, und somit die Innenfläche des Radkörpers 2 ausreichend nahe an der Nabe 3 ist. Der Konstruktionselemente (u.a. Kugelreihe) des Lagerpunktes 6 werden mittels einer Kappenabdeckung gegen Schmutzeinwirkung von außen geschützt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Insbesondere kann ferner vorgesehen sein, auch den Lagerpunkt 6 derart auszubilden, dass die die Nabe 3 in Umfangsrichtung im Bereich des zweiten Lagerpunktes 6 eine außenseitige Einsenkung aufweist, innerhalb derer die Kugelreihe des Lagerpunktes 6 laufen.

## Patentansprüche

1. Tragrollenlager mit einem Radkörper (2) und einer darin angeordneten Nabe (3) innerhalb derer eine Achse (4) in axialer Richtung verschiebbar aufgenommen ist, wobei die Achse (4) ohne Krafteinwirkung einseitig über einen axialen Randbereich des Radkörpers (2) hervorsteht und in dem Radkörper (2) auf einer ersten axialen Seite ein erstes Lagerpunkt (5) und auf der gegenüberliegenden zweiten axialen Seite ein zweiter Lagerpunkt (6) angeordnet sind, wobei die Nabe (3) durch den ersten und zweiten Lagerpunkt (5, 6) mehrfach gelagert ist, wobei
der erste und der zweite Lagerpunkt (5, 6) in axialer Richtung voneinander beabstandet angeordnet sind, wobei die Beabstandung des ersten und des zweiten Lagerpunktes (5, 6) mindestens 1/4 der axialen Erstreckungslänge der Nabe (3) innerhalb des Radkörpers (2) beträgt, **dadurch gekennzeichnet, dass**
der erste und zweite Lagerpunkt (5, 6) jeweils durch spanlos gefertigte Kugellager gebildet ist, und
die Nabe (3) einen Innenring des Tragrollenlagers (1) an mindestens einem der ersten und zweiten Lagerpunkte (5, 6) bildet.

2. Tragrollenlager nach zumindest einem der vorigen Ansprüche, **dadurch gekennzeichnet, dass** sich die Achse (4) formschlüssig innerhalb der Nabe (3) gleitend angeordnet ist und die axiale Erstreckung der Achse (4) innerhalb der Nabe (3) endet.

3. Tragrollenlager nach zumindest einem der vorigen Ansprüche, **dadurch gekennzeichnet, dass** die Achse (4) vollständig in die Nabe (3) einsteckbar ist.

4. Tragrollenlager nach zumindest einem der vorigen Ansprüche, **dadurch gekennzeichnet, dass** in der Nabe (3) eine sich an dieser abstützende Feder (7) angeordnet ist, die auf die Achse (4) eine Kraft ein axialer Richtung Kraft ausübt.

5. Tragrollenlager nach dem vorigen Anspruch, **dadurch gekennzeichnet, dass** in der Nabe (3) ein sich in axialer Richtung zur Achse (4) hin erstreckender Vorsprung (8) vorgesehen ist, den die Feder (7) umgibt.

6. Tragrollenlager nach zumindest einem der vorigen Ansprüche 4 - 5, **dadurch gekennzeichnet, dass** die Achse (4) mit einem einseitig offenen inneren Hohlraum (9) ausgebildet ist, in den sich die Feder (7) hinein erstreckt.

7. Tragrollenlager nach zumindest einem der vorigen Ansprüche, **dadurch gekennzeichnet, dass** sich die Nabe (3) über die gesamte axiale Länge des Radkörpers (2) erstreckt.

8. Tragrollenlager nach zumindest einem der vorigen Ansprüche, **dadurch gekennzeichnet, dass** die Nabe (3) auf der Seite der Achse (4) als einseitiger Verschluss des Radkörpers (2) dient.

9. Tragrollenlager nach zumindest einem der vorigen Ansprüche, **dadurch gekennzeichnet, dass** der Radkörper (2) einen Außenring des Tragrollenlagers (1) an mindestens einem der ersten und zweiten Lagerpunkte (5, 6) bildet.

10. Tragrollenlager nach zumindest einem der vorigen Ansprüche, **dadurch gekennzeichnet, dass** die Achse (4) in Umfangsrichtung einen Vorsprung (10) aufweist, der an einer an der Nabe (3) innenseitig ausgebildeten Nut (11) gleitend anliegt.

11. Tragrollenlager nach dem vorigen Anspruch, **dadurch gekennzeichnet, dass** der Vorsprung (10) als Sicherung der Achse (4) in der Nabe (3) dient.

## Claims

1. A conveyor roller bearing having a wheel body (2) und a hub (3) arranged therein within which an axle (4) is movably received in axial direction, wherein said axle (4) projects beyond an axial edge area of said wheel body (2) on one side without the application of force and a first bearing point (5) is arranged on a first axial side and a second bearing point (6) is arranged on the opposite second axial side in said wheel body (2), wherein said hub (3) is multiply-mounted by said first and second bearing point (5, 6), wherein
said first and second bearing point (5, 6) are arranged spaced from each other in axial direction, wherein
said spacing of said first and second bearing point (5, 6) is at least ¼ of the axial length of extension of said hub (3) within said wheel body (2), **characterized in that**
said first and second bearing point (5, 6) are in each case formed by chipless manufactured ball bearings and
said hub (3) forms an inner ring of said conveyor roller bearing (1) on at least one of said first and second bearing points (5, 6).

2. The conveyor roller bearing according to at least one of the preceding claims, **characterised in that** said axle (4) is arranged form-fit slidably within said hub (3) and the axial extension of said axle (4) ends within said hub (3).

3. The conveyor roller bearing according to at least one of the preceding claims, **characterised in that** said axle (4) is completely insertable into the hub (3).

4. The conveyor roller bearing according to at least one of the preceding claims, **characterised in that** in said hub (3) a spring (7) supporting thereto is arranged exerting a force on said axle (4) in axial direction.

5. The conveyor roller bearing according to the preceding claim, **characterised in that** in said hub (3) a projection (8) surrounded by said spring (7) is provided extending towards said axle (4) in axial direction.

6. The conveyor roller bearing according to at least one of the preceding claims 4-5, **characterised in that** said axle (4) is formed with an internal cavity (9) open at one side into which said spring (7) extends.

7. The conveyor roller bearing according to at least one of the preceding claims, **characterised in that** said hub (3) extends over the entire axial length of said wheel body (2).

8. The conveyor roller bearing according to at least one of the preceding claims, **characterised in that** said hub (3) serves as a one-sided closure of said wheel body (2) on the side of said axle (4).

9. The conveyor roller bearing according to at least one of the preceding claims, **characterised in that** said wheel body (2) forms an outer ring of said conveyor roller bearing (1) on at least one of said first and second bearing points (5, 6).

10. The conveyor roller bearing according to at least one of the preceding claims, **characterised in that** said axle (4) has a projection (10) in circumferential direction which rests slidingly on a groove (11) formed on the inner side of said hub (3).

11. The conveyor roller bearing according the preceding claim, **characterised in that** said projection (10) serves as a securing device of the axle (4) in said hub (3).

## Revendications

1. Palier à rouleaux porteurs comprenant un corps de roue (2) et un moyeu (3) disposé dans ce dernier, lequel loge un axe (4) de manière à pouvoir être déplacé par coulissement dans une direction axiale, sachant que l'axe (4) fait saillie sans l'action d'une force d'un côté d'une zone de bord axiale du corps de roue (2) et que, dans le corps de roue (2), un premier point de palier (5) est disposé sur un premier côté axial et qu'un deuxième point de palier (6) est disposé sur le deuxième côté axial opposé, dans lequel le moyeu (3) est monté à plusieurs reprises par le premier et le deuxième point de palier (5, 6), dans lequel
le premier et le deuxième point de palier (5, 6) sont disposés à distance l'un de l'autre dans une direction axiale, dans lequel
la distance du premier et du deuxième point de palier (5, 6) est égale au moins à 1/4 de la longueur d'extension axiale du moyeu (3) à l'intérieur du corps de roue (2), **caractérisé en ce que**
le premier et le deuxième point de palier (5, 6) sont formés respectivement par des roulements à billes produits sans enlèvement de copeaux, et que
le moyeu (3) forme une bague intérieure du palier à rouleaux porteurs (1) au niveau au moins d'un des premier et deuxième points de palier (5, 6).

2. Palier à rouleaux porteurs selon au moins l'une quelconque des revendications précédentes, **caractérisé en ce que** l'axe (4) est disposé par complémentarité de forme de manière à glisser à l'intérieur du moyeu (3), et **en ce que** l'extension axiale de l'axe (4) termine à l'intérieur du moyeu (3).

3. Palier à rouleaux porteurs selon au moins l'une quelconque des revendications précédentes, **caractérisé en ce que** l'axe (4) peut être emboîté totalement dans le moyeu (3).

4. Palier à rouleaux porteurs selon au moins l'une quelconque des revendications précédentes, **caractérisé en ce qu'**est disposé, dans le moyeu (3), un ressort (7) prenant appui au niveau de ce dernier, lequel ressort exerce sur l'axe (4) une force dans une direction axiale.

5. Palier à rouleaux porteurs selon la revendication précédente, **caractérisé en ce qu'**est prévue, dans le moyeu (3), une partie faisant saillie (8) s'étendant dans une direction axiale par rapport à l'axe (4), que le ressort (7) entoure.

6. Palier à rouleaux porteurs selon au moins l'une quelconque des revendications 4 - 5, **caractérisé en ce que** l'axe (4) est réalisé avec un espace creux (9) intérieur ouvert d'un côté, à l'intérieur duquel le ressort (7) s'étend.

7. Palier à rouleaux porteurs selon au moins l'une quelconque des revendications précédentes, **caractérisé en ce que** le moyeu (3) s'étend sur toute la longueur axiale du corps de roue (2).

8. Palier à rouleaux porteurs selon au moins l'une quelconque des revendications précédentes, **caractérisé en ce que** le moyeu (3) sur le côté de l'axe (4) fait office de fermeture d'un côté du corps de roue (2).

9. Palier à rouleaux porteurs selon au moins l'une quelconque des revendications précédentes, **caractérisé en ce que** le corps de roue (2) forme une bague extérieure du palier à rouleaux porteurs (1) au niveau au moins d'un des premier et deuxième points de palier (5, 6).

10. Palier à rouleaux porteurs selon au moins l'une quelconque des revendications précédentes, **caractérisé en ce que** l'axe (4) présente dans la direction périphérique une partie faisant saillie (10), qui repose de manière à glisser au niveau d'une rainure (11) réalisée côté intérieur au niveau du moyeu (3).

11. Palier à rouleaux porteurs selon la revendication précédente, **caractérisé en ce que** la partie faisant saillie (10) fait office de système de blocage de l'axe (4) dans le moyeu (3).
